# FASCICULE DE BREVET EUROPEEN

(11) **EP 1 422 869 B1**
(45) Date de publication et mention de la délivrance du brevet: **14.06.2006**
(21) Numéro de dépôt: 03292467.2
(22) Date de dépôt: 07.10.2003
(51) Int. Cl.: H04L 12/24, H04L 12/56, H04Q 11/04

(54) **Procédé de vérification de l'état du plan de commande d'un réseau de télécommunications**
Verfahren zur Zustandsüberprüfung vom Steuerungsplan eines Telekommunikationsnetzwerks
Method for checking the status of a control plan of a telecommunications network

(30) Priorité: 30.10.2002 FR 0213635
(43) Date de publication de la demande: 26.05.2004
(73) Titulaire: FRANCE TELECOM, 75015 Paris (FR)
(72) Inventeur: Daniel, Rémi, 22300 Lannion (FR)
(74) Mandataire: Jeune, Pascale

(56) Documents cités:
- WO-A-01/84787
- US-A- 6 069 895
- CISCO SYSTEMS INC: "Troubleshooting ATM Switch Router Network Connections" CATALYST 8540 MSR RELEASE 12.0(4A)W5(11A) DOCUMENTS - ATM SWITCH ROUTER TROUBLESHOOTING GUIDE , [en ligne] 3 mars 2000 (2000-03-03), pages 5-1-5-62, XP002246925 Extrait de l'Internet: <URL:http://www.cisco.com/univercd/cc/td/d oc/product/atm/c8540/12_0/4a_11a/trouble/a tm_net.pdf> [extrait le 2003-07-09]
- CISCO SYSTEMS INC: "Troubleshooting Tag Switching Connections" CATALYST 8540 MSR RELEASE 12.0(4A)W5(11A) DOCUMENTS - ATM SWITCH ROUTER TROUBLESHOOTING GUIDE , [en ligne] 3 mars 2000 (2000-03-03), pages 7-1-7-12, XP002246926 Extrait de l'Internet: <URL:http://www.cisco.com/univercd/cc/td/d oc/product/atm/c8540/12_0/4a_11a/trouble/t ag_sw.pdf> [extrait le 2003-07-09]
- AWDUCHE D O ET AL: "RSVP-TE: Extensions to RSVP for LSP Tunnels" INTERNET DRAFT <DRAFT-IETF-MPLS-RSVP-LSP-TUNNEL-08.TXT>, 1 février 2001 (2001-02-01), XP002199928

## Description

La présente invention concerne un procédé de vérification de l'état du plan de commande d'un réseau de télécommunications.

On rappelle qu'un protocole de routage est un protocole implémenté dans un réseau de manière à établir pour chaque communication une route dans le réseau en fonction de différents paramètres. Parmi ces protocoles de routage, on peut distinguer les protocoles dits vecteurs de distance, tels que les protocoles connus sous les acronymes de RIP et IGRP et les protocoles à états de liens, tels que les protocoles dont les acronymes sont OSPF (Open Short Path First) et PNNI (Private Network-Node Interface or Private Network-Network Interface : Interface noeud-réseau privé ou Interface réseau-réseau privé). Ce qui caractérise un protocole à état de liens par rapport aux précédents, est que chaque routeur d'un réseau a une image complète des routes utilisables dans l'ensemble du réseau.

De manière générale, un protocole à état de lien est un protocole de routage dynamique qui recherche une route dans le réseau qui satisfasse à des critères de bande passante, de délai de transit, de régularité du transit, etc. demandés par l'appelant. Pour ce faire, des informations concernant l'état des liens entre noeuds du réseau ainsi que l'état des commutateurs présents à ces noeuds sont échangées de manière régulière entre ces commutateurs. Ces états de liens et des commutateurs sont exprimés sous forme de métrique et d'attributs et permettent de prendre en compte la qualité de service demandée par l'utilisateur.

Le rôle d'un protocole de routage à états de liens est de permettre à chaque noeud, par échange d'informations entre les différents commutateurs du réseau concernant l'état des liens entre noeuds du réseau et l'état desdits commutateurs, de se représenter la topologie complète du réseau et d'obtenir la liste des adresses accessibles. Lors d'une modification topologique ou d'accessibilité, seules les informations qui ont été modifiées sont mises à jour dans chacun des noeuds. Sur la base de ces informations, le noeud déroule alors un algorithme de calcul de route pour atteindre toutes les destinations possibles. Le protocole de signalisation permet ensuite d'établir la route appropriée dans le réseau en demandant la réservation de ressources dans chaque noeud traversé.

Parmi les protocoles à état de lien actuellement mis en oeuvre, on connaît le protocole OSPF utilisé en tant que protocole de routage dans des réseaux mettant en oeuvre la technique MPLS (Multiprotocol Label Switching : commutation multi-protocole par labels) et le protocole PNNI, inspiré du premier, généralement implémenté dans des réseaux ATM (Asynchronous Transfer Mode : mode de transfert asynchrone). On notera que le protocole PNNI est un protocole à état de liens qui, non seulement recherche une route dans le réseau susceptible de convenir à l'usager mais établit également, au moyen d'un protocole de signalisation intégré, ladite route.

Le protocole OSPF fait l'objet de divers RFCs (Request For Comments) à l'IETF (Internet Engineering Task Force). Quant au protocole PNNI, il fait l'objet, dans sa version 1.0 de mars 1996, de la spécification af-pnni-055.000 de l'ATM Forum.

La présente invention s'applique aussi bien aux réseaux ATM qui mettent en oeuvre le protocole de routage PNNI qu'aux réseaux IP qui mettent en oeuvre le protocole MPLS et par conséquent, un protocole à état de liens tels que le protocole OSPF.

La mise en oeuvre de ces protocoles à état de lien est illustrée par le brevet américain US 6,069,895.

Le problème que cherche à résoudre la présente invention est de vérifier si les informations de topologie, les annonces d'adresses et les mécanismes d'acheminement sont correctement mis en place dans le réseau lors de sa phase d'installation ou suite à des évolutions. De manière générale, il est de vérifier l'état du plan de commande qui, rappelons le, concerne tout ce qui a trait à la commande du réseau pour l'établissement, le maintien et la libération des connexions.

Aujourd'hui, pour résoudre ce problème, on utilise des outils de gestion d'un système centralisé de gestion qui recueillent tour à tour de chaque élément du réseau, tel qu'un commutateur, des informations de topologie pour connaître l'accessibilité et l'état des canaux de routage et de signalisation. Cette technique s'avère être particulièrement fastidieuse à mettre en oeuvre, en particulier dans des réseaux de taille importante, et, en définitive, ne permet pas de facilement vérifier la connexité globale dans le réseau.

Le but de la présente invention est donc de proposer un procédé de vérification de l'état du plan de commande d'un réseau de télécommunications utilisant un protocole de routage à état de liens qui ne présente pas les inconvénients de la méthode de l'art antérieur précédemment décrite.

Pour ce faire, la présente invention concerne donc un procédé de vérification de l'état du plan de commande d'un réseau de télécommunications selon la revendication 1.

Selon une autre caractéristique de l'invention, ledit réseau de télécommunications est un réseau ATM, le protocole de routage et le protocole de signalisation sont inclus dans un protocole du type dit PNNI, et les connexions établies entre noeuds d'accès dudit réseau sont des connexions du type connexion virtuelle soft permanente dite SPVC. Dans ce cas, pour établir lesdites connexions entre noeuds d'accès dudit réseau, peut être utilisée l'adresse dite AESA d'un port UNI de chacun desdits noeuds d'accès. De même, pour établir une connexion entre deux noeuds d'accès dudit réseau, peut être utilisé un couple d'identificateurs VPI/VCI pour les extrémités de ladite connexion.

Selon une autre caractéristique de l'invention, ledit réseau de télécommunications est un réseau IP mettant en oeuvre un protocole dit MPLS et les connexions établies entre noeuds d'accès dudit réseau sont des trajets dit LSP.

La présente invention concerne également un système de vérification de l'état du plan de commande d'un réseau de télécommunications selon la revendication 6.

Selon une autre caractéristique de l'invention, ledit système peut comporter une base de données recensant les adresses dites AESA des ports UNI ou NNI de chacun desdits noeuds d'accès.

De même, il peut comporter une base de données recensant les couples d'identificateurs VPI/VCI pour les extrémités de chacune des connexions qui peuvent être établies entre deux noeuds d'accès dudit réseau de télécommunications.

Ce système de vérification peut être prévu pour être connecté au système de gestion centralisé dudit réseau ou au contraire il peut être partie intégrante du système de gestion centralisé dudit réseau.

La présente invention concerne également un programme destiné à être implémenté sur un système de vérification de l'état du plan de commande d'un réseau de télécommunications selon la revendication 11.

Selon une autre caractéristique de l'invention, ledit programme incorpore une base de données recensant les adresses dites AESA des ports UNI ou NNI de chacun desdits noeuds d'accès. De même, il incorpore une base de données recensant les couples d'identificateurs VPI/VCI pour les extrémités de chacune des connexions qui peuvent être établies entre deux noeuds d'accès dudit réseau de télécommunications.

Ce programme peut être implémenté sur un système de gestion centralisé dudit réseau ou, au contraire, sur une machine dédiée connectable au système de gestion centralisé dudit réseau.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 est une vue d'un réseau auquel le procédé de vérification selon la présente invention est applicable et,
La Fig. 2 est une vue d'un système de vérification selon la présente invention.

La présente invention est basée sur le principe de vérifier que tout noeud d'accès d'un réseau peut atteindre tous les autres noeuds d'accès en établissant directement une connexion de ce noeud d'accès vers chacun des autres noeuds d'accès du réseau.

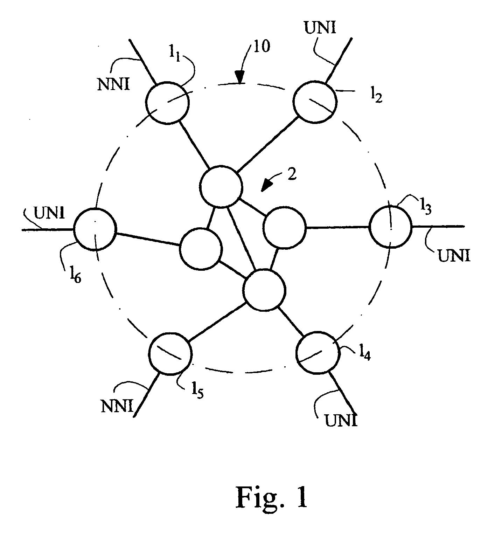

Le réseau 10 qui est représenté à la Fig. 1 est constitué de noeuds d'accès 1₁ à 1ₙ auxquels des utilisateurs, via des interfaces usager-réseau UNI (User Network Interface), ou d'autres réseaux, via des interfaces réseau-réseau NNI (Network Network Interface), peuvent avoir accès et un ensemble 2 de noeuds internes au réseau reliés entre eux ainsi qu'aux noeuds d'accès 1₁ à 1ₙ. Selon l'invention, pour vérifier qu'un noeud d'accès 1ᵢ (i = 1 à n) peut atteindre tous les autres noeuds d'accès 1ⱼ (j = 1 à n mais j ≠ i) ou les noeuds d'accès 1ₖ (0 < k < n et k ≠ i) d'un ensemble de noeuds d'accès dont on veut vérifier les connexions avec le noeud d'accès 1ᵢ, des connexions sont établies entre ce noeud d'accès 1 dit noeud d'origine, et chacun des autres noeuds d'accès 1ⱼ (j = 1 à n mais j ≠i) ou 1ₖ (0 < k < n et k ≠ i) dits noeuds cibles. Selon l'invention toujours, ces connexions sont établies à l'initiative du noeud d'origine.

Pour ce faire, si le réseau 10 est un réseau ATM, les connexions qui sont établies sont des connexions qui sont dites SPVC (Soft-permanent virtual connexion : connexion virtuelle permanente souple). Ce type de connexion a été normalisé pour permettre à l'opérateur d'établir des connexions de services permanents en utilisant un protocole de signalisation intégré dans le protocole PNNI. Elles font l'objet de la spécification af-pnni-0055.000 de l'ATM Forum, notamment de son annexe C, mais également de l'addendum af-cs-0127.000 de juillet 1999 de l'ATM Forum également.

S'il s'agit d'un réseau IP mettant en oeuvre le protocole MPLS, les connexions qui sont établies sont des trajets LSPs (Label Switch Path : trajet de commutation par labels) entre le noeud d'origine dit aussi noeud d'entrée (ingress node) et un noeud cible dit aussi noeud de sortie (egress node).

Du fait que dans l'un ou l'autre de ces réseaux, c'est un protocole de routage à état de liens qui est mis en oeuvre (généralement PNNI pour un réseau ATM et OSPF pour un réseau IP), tous les noeuds internes du réseau ont une table dans laquelle sont répertoriées toutes les informations de topologie, notamment leur état, concernant chacune des connexions déjà établies.

Ces informations de topologie peuvent alors être transmises à un organe de gestion centralisée qui en effectue l'analyse. Cette analyse de l'état de ces connexions permet sans traitement complexe de connaître si tel noeud peut atteindre tel autre noeud.

Les connexions qui sont établies doivent être très peu exigeantes en terme de bande passante (quelques cellules par seconde) pour, d'une part, ne pas surcharger les liens du réseau et, d'autre part, éviter les rejets pour cause de bande passante indisponible.

Un noeud d'accès peut n'établir une connexion qu'avec un nombre restreint d'autres noeuds d'accès, par exemple suite à une évolution mineure du réseau.

On notera que pour un réseau avec n noeuds d'accès une vérification complète nécessite l'établissement de n(n-1) connexions.

La méthode de vérification selon l'invention consiste alors :
- à partir d'un noeud d'accès de réseau d'origine, demander l'établissement d'une connexion entre ce noeud d'accès d'origine et un autre noeud d'accès cible dudit réseau,
- recueillir les informations d'état de ladite connexion et, lorsque celle-ci a pu être établie, également les informations concernant les noeuds empruntés par ladite connexion (ces informations sont disponibles auprès des noeuds du réseau grâce au protocole à état de liens que le réseau met en oeuvre),
- libérer ladite connexion lorsque celle-ci a pu être établie,
- recommencer pour tous les autres noeuds d'accès dont les connexions avec ledit noeud d'accès d'origine sont à vérifier,
- analyser les informations d'état des connexions à vérifier et des informations concernant les noeuds empruntés par ladite connexion lorsque celle-ci a pu être établie à des fins de vérification du plan de commande dudit réseau.

On notera que l'ensemble de ces étapes de la méthode peut être mis en oeuvre par un programme ou logiciel qui peut être implémenté, soit sur une machine dédiée, soit dans une unité de gestion de réseau.

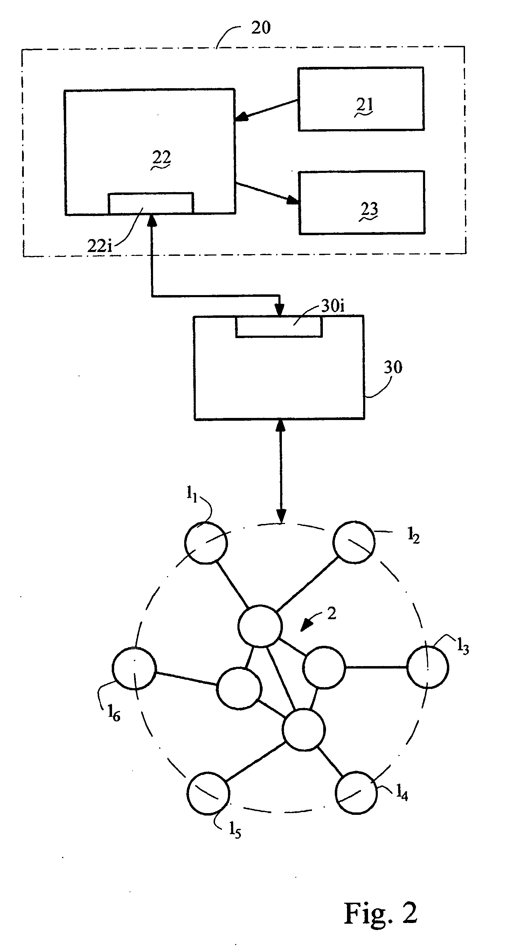

A la Fig. 2, on peut voir un système 20 de vérification de l'état du plan de commande d'un réseau de télécommunications qui comprend une base de données 21 qui recense la liste des adresses des ports UNI des noeuds d'accès 1₁ à 1ₙ du réseau 10 (par exemple adresses dites AESA), les identificateurs des circuits virtuels des connexions à établir (ces identificateurs sont, pour un réseau ATM, les identificateurs VPI/VCI (virtual path identifier/virtuel circuit identifier : identificateurs de chemin virtuel et de circuit virtuel) et pour un réseau IP implémentant le protocole MPLS, les adresses des noeuds d'accès du réseau). Elle recense également pour chaque connexion à établir la qualité de service QoS requise soit sous la forme des informations de contrat de trafic en ce qui concerne un réseau ATM soit sous la forme des informations de classe de service IP pour un réseau IP implémentant le protocole MPLS.

Il comporte encore une unité de gestion des connexions 22 qui effectue la commande d'établissement, à partir d'un noeud d'accès du réseau, d'une connexion entre ce noeud d'accès et un autre noeud d'accès dudit réseau et, ce, en fonction des données (adresses des ports UNI des noeuds concernés, identificateurs des connexions virtuelles à créer et informations relatives à la qualité de service QoS) qui sont listées dans la base de données 21. On notera que le noeud d'accès cible peut appartenir à un ensemble de noeuds d'accès dont les connexions avec le noeud d'accès à l'initiative de la connexion est à vérifier. Elle effectue également la commande pour recueillir les informations d'état des connexions et les informations concernant les noeuds des connexions qui ont été établies. Il s'agit de l'état d'établissement réussi ou d'échec de l'établissement, la route empruntée entre les noeuds internes du réseau si la connexion a été établie. Elle effectue également la commande de la libération de la connexion précédemment établie.

Il comporte encore une unité d'analyse 23 qui recense pour chaque connexion établie si celle-ci a pu être établie (information d'état de la connexion établie), toutes les informations d'état recueillies auprès des noeuds internes ce qui lui permet de déterminer par exemple la route qui a été empruntée, par exemple sous la forme d'une liste des noeuds internes empruntés si la connexion a été établie et, si cela n'est pas le cas, l'adresse de destination du noeud cible qui n'a pu être atteint. On rappelle ici à toute fin utile que c'est le noeud d'origine qui est à l'initiative d'une connexion.

Pour pouvoir effectuer ces fonctions l'unité de gestion de connexions 22 est reliée, par une interface appropriée 22i, à une unité de gestion centralisée du réseau 30, elle-même interfacée en 30i à chacun des routeurs constituant les noeuds internes du réseau 10. Ces différentes interfaces 22i et 30i peuvent utiliser tout type de protocole approprié comme par exemple le protocole de gestion de réseau dit SNMP (Simple Network Management Protocol : Protocole simple de gestion de réseau).

La mise en oeuvre de la méthode de la présente invention améliore la qualité de supervision du plan de commande d'un réseau PNNI en permettant à l'exploitant de ce réseau de :
- Vérifier, dans le plan de commande, la connexité entre tous les routeurs constituant les noeuds d'accès du réseau pour garantir le maintien de la qualité d'établissement des connexions commutées. Ceci permet de s'assurer qu'il est possible d'atteindre toutes les destinations, que les canaux de signalisation et de routage sont opérationnels, que les informations topologiques et d'accessibilité sont bien diffusées par le protocole de routage,
- Vérifier une certaine cohérence entre la base de données topologiques du protocole de routage détenues par chaque routeur d'accès et les règles d'ingénierie du réseau. Par exemple, l'opérateur peut privilégier des noeuds ou liens lors de la configuration du plan de commande. Il est ainsi possible de contrôler que l'acheminement est conforme aux souhaits de l'opérateur,
- Optimiser le maillage du réseau. Par exemple, la méthode permet de voir si des liens ne sont jamais utilisés par le calcul de chemin,
- Déterminer si le réseau est responsable ou pas de l'échec de l'établissement de connexions commutées et donc détecter d'éventuelles pannes,
- Estimer la performance du plan de commande, en particulier le temps d'établissement des connexions.

## Revendications

1. Procédé de vérification de l'état du plan de commande d'un réseau de télécommunications comprenant des noeuds d'accès et des noeuds internes, ledit réseau mettant en oeuvre un protocole de routage à état de liens permettant de connaître les informations d'état de connexions établies et les informations concernant les noeuds empruntés par lesdites connexions, ledit réseau mettant en oeuvre également un protocole de signalisation permettant d'établir des connexions entre deux noeuds d'accès dudit réseau à partir d'un desdits noeuds, **caractérisé en ce qu'**il comporte les étapes suivantes :
- à partir d'un noeud d'accès de réseau, demander l'établissement d'une connexion entre ce noeud d'accès et un autre noeud d'accès,
- recueillir l'état d'établissement réussi ou d'échec de l'établissement de ladite connexion et, si celle-ci a pu être établie, également la route empruntée entre les noeuds internes par ladite connexion,
- libérer ladite connexion lorsque celle-ci a pu être établie,
- recommencer pour tous les autres noeuds d'accès dont les connexions avec ledit noeud d'accès d'origine sont à vérifier,
- analyser les informations d'état d'établissement des connexions à vérifier ainsi recueillies et les routes empruntées entre les noeuds internes par lesdites connexions qui avaient pu être établies à des fins de vérification de l'état du plan de commande dudit réseau.

2. Procédé de vérification selon la revendication 1, **caractérisé en ce que** ledit réseau de télécommunications est un réseau ATM, **en ce que** le protocole de routage et le protocole de signalisation sont inclus dans un protocole du type dit PNNI, et **en ce que** les connexions établies entre noeuds d'accès dudit réseau sont des connexions du type connexion virtuelle soft permanente dite SPVC.

3. Procédé de vérification selon la revendication 2, **caractérisé en ce que** pour établir lesdites connexions entre noeuds d'accès dudit réseau, est utilisée l'adresse dite AESA d'un port UNI de chacun desdits noeuds d'accès.

4. Procédé de vérification selon la revendication 2 ou 3, **caractérisé en ce que** pour établir une connexion entre deux noeuds d'accès dudit réseau, est utilisé un couple d'identificateurs VPI/VCI pour les extrémités de ladite connexion.

5. Procédé de vérification selon la revendication 1, **caractérisé en ce que** ledit réseau de télécommunications est un réseau IP mettant en oeuvre un protocole dit MPLS et **en ce que** les connexions établies entre noeuds d'accès dudit réseau sont des trajets dit LSP.

6. Système de vérification de l'état du plan de commande d'un réseau de télécommunications comprenant des noeuds d'accès et des noeuds internes, ledit réseau mettant en oeuvre un protocole de routage à état de liens permettant de connaître les informations d'état de connexions établies et les informations concernant les noeuds empruntés par lesdites connexions, ledit réseau mettant en oeuvre également un protocole de signalisation permettant d'établir des connexions entre deux noeuds d'accès dudit réseau à partir d'un desdits noeuds, **caractérisé en ce qu'**il comporte :
- des moyens (22) pour commander l'établissement, à partir d'un noeud d'accès de réseau, d'une connexion entre ce noeud d'accès et un autre noeud d'accès dudit réseau dont les connexions avec ledit noeud d'accès d'origine sont à vérifier,
- des moyens (22) pour recueillir l'état d'établissement réussi ou d'échec de l'établissement de ladite connexion dont l'établissement a été demandé, et pour recueillir la route empruntée entre les noeuds internes, par ladite connexion lorsque celle-ci a pu être établie,
- des moyens pour libérer ladite connexion lorsque celle-ci a pu être établie,
- des moyens pour recommencer pour tous les autres noeuds d'accès dont les connexions avec ledit noeud d'accès d'origine sont à vérifier
- des moyens (23) pour analyser lesdites informations d'état d'établissement des connexions à vérifier et les routes empruntées entre les noeuds internes par lesdites connexions lorsque celles-ci avaient pu être établies à des fins de vérification de l'état du plan de commande dudit réseau.

7. Système de vérification selon la revendication 5, **caractérisé en ce qu'**il comporte une base de données (21) recensant les adresses dites AESA des ports UNI ou NNI de chacun desdits noeuds d'accès.

8. Système de vérification selon la revendication 5 ou 6, **caractérisé en ce qu'**il comporte une base de données (21) recensant les couples d'identificateurs VPI/VCI pour les extrémités de chacune des connexions qui peuvent être établies entre deux noeuds d'accès dudit réseau de télécommunications.

9. Système de vérification selon une des revendications 6 à 8, **caractérisé en ce qu'**il est prévu pour être connecté au système de gestion centralisé dudit réseau.

10. Système de vérification selon une des revendications 6 à 8, **caractérisé en ce qu'**il est partie intégrante du système de gestion centralisé dudit réseau.

11. Programme destiné à être implémenté sur un système de vérification de l'état du plan de commande d'un réseau de télécommunications comprenant des noeuds d'accès et des noeuds internes, ledit réseau mettant en oeuvre un protocole de routage à état de liens permettant de connaître les informations d'état de connexions établies et les informations concernant les noeuds empruntés par lesdites connexions, ledit réseau mettant en oeuvre également un protocole de signalisation permettant d'établir des connexions entre deux noeuds d'accès dudit réseau à partir d'un desdits noeuds, **caractérisé en ce qu'**il comporte :
- des moyens pour, à partir d'un noeud d'accès de réseau, demander l'établissement d'une connexion entre ce noeud d'accès et un autre noeud d'accès,
- des moyens pour recueillir l'état d'établissement réussi on d'échec de l'établissement de ladite connexion et, si celle-ci a pu être établie, également la route empruntée entre les noeuds internes par ladite connexion,
- des moyens pour libérer ladite connexion lorsque celle-ci avait pu être établie,
- des moyens pour recommencer pour tous les autres noeuds d'accès dont les connexions avec ledit noeud d'accès d'origine sont à vérifier,
- des moyens d'analyse des informations d'état d'établissement des connexions à vérifier et des routes empruntées entre les noeuds internes. par lesdites connexions lorsque celles-ci avaient pu être établies.

12. Programme selon la revendication 11, **caractérisé en ce qu'**il incorpore une base de données (21) recensant les adresses dites AESA des ports UNI ou NNI de chacun desdits noeuds d'accès.

13. Programme selon la revendication 11 ou 12, **caractérisé en ce qu'**il comporte une base de données (21) recensant les couples d'identificateurs VPI/VCI pour les extrémités de chacune des connexions qui peuvent être établies entre deux noeuds d'accès dudit réseau de télécommunications.

14. Programme selon une des revendications 11 à 12, **caractérisé en ce qu'**il est prévu pour être implémenté sur un système de gestion centralisé dudit réseau.

15. Programme selon une des revendications 11 à 12, **caractérisé en ce qu'**il est prévu pour être implémenté sur une machine dédiée connectable au système de gestion centralisé dudit réseau.

## Claims

1. Method for verifying the state of the control plan of a telecommunications network comprising access nodes and internal nodes, the said network using a link state routing protocol making it possible to ascertain the state information of established connections and the information concerning the nodes used by the said connections, the said network also using a signalling protocol making it possible to establish connections between two access nodes of the said network from one of the said nodes, **characterized in that** it comprises the following steps:
- from a network access node, requesting the establishment of a connection between this access node and another access node,
- collecting the state of successful establishment or of failed establishment of the said connection and, if the latter has been able to be established, also the route used between the internal nodes by the said connection,
- releasing the said connection when the latter has been able to be established,
- repeating the above steps for all the other access nodes whose connections with the said originating access node are to be verified,
- analysing the information on the state of establishment of the connections to be verified thus collected and the routes used between the internal nodes by the said connections that have been able to be established for the purpose of verifying the state of the control plan of the said network.

2. Verification method according to Claim 1, **characterized in that** the said telecommunications network is an ATM network, **in that** the routing protocol and the signalling protocol are included in a protocol of the type called PNNI and **in that** the connections established between the access nodes of the said network are connections of the soft permanent virtual connection type called SPVC.

3. Verification method according to Claim 2, **characterized in that**, to establish the said connections between access nodes of the said network, the address called AESA of a UNI port of each of the said access nodes is used.

4. Verification method according to Claim 2 or 3, **characterized in that**, to establish a connection between two access nodes of the said network, a pair of VPI/VCI identifiers is used for the ends of the said connection.

5. Verification method according to Claim 1, **characterized in that** the said telecommunications network is an IP network using a protocol called MPLS and **in that** the connections established between access nodes of the said network are paths called LSP.

6. System for verifying the state of the control plan of a telecommunications network comprising access nodes and internal nodes, the said network using a link state routing protocol making it possible to ascertain the state information of established connections and the information concerning the nodes used by the said connections, the said network also using a signalling protocol making it possible to establish connections between two access nodes of the said network from one of the said nodes, **characterized in that** it comprises:
- means (22) for commanding the establishment, from one network access node, of a connection between this access node and another access node of the said network whose connections with the said originating access node are to be verified,
- means (22) for collecting the state of successful establishment or of failed establishment of the said connection whose establishment has been requested, and for collecting the route used between the internal nodes by the said connection when the latter has been able to be established,
- means for releasing the said connection when the latter has been able to be established,
- means for repeating the above steps for all the other access nodes whose connections with the said originating access node are to be verified,
- means (23) for analysing the said information on the state of establishment of the connections to be verified and the routes used between the internal nodes by the said connections when the latter have been able to be established for the purpose of verifying the state of the control plan of the said network.

7. Verification system according to Claim 5, **characterized in that** it comprises a database (21) listing the addresses called AESA of the UNI or NNI ports of each of the said access nodes.

8. Verification system according to Claim 5 or 6, **characterized in that** it comprises a database (21) listing the pairs of VPI/VCI identifiers for the ends of each of the connections that can be established between two access nodes of the said telecommunications network.

9. Verification system according to one of Claims 6 to 8, **characterized in that** it is designed to be connected to the centralized management system of the said network.

10. Verification system according to one of Claims 6 to 8, **characterized in that** it is an integral part of the centralized management system of the said network.

11. Program intended to be implemented on a system for verifying the state of the control plan of a telecommunications network comprising access nodes and internal nodes, the said network using a link state routing protocol making it possible to ascertain the state information of established connections and the information concerning the nodes used by the said connections, the said network also using a signalling protocol making it possible to establish connections between two access nodes of the said network from one of the said nodes, **characterized in that** it comprises:
- means for requesting the establishment, from one network access node, of a connection between this access node and another access node,
- means for collecting the state of successful establishment or of failed establishment of the said connection and, if the latter has been able to be established, also the route used between the internal nodes by the said connection,
- means for releasing the said connection when the latter has been able to be established,
- means for repeating the above steps for all the other access nodes whose connections with the said originating access node are to be verified,
- means for analysing the information on the state of establishment of the connections to be verified and the routes used between the internal nodes by the said connections when the latter have been able to be established.

12. Program according to Claim 11, **characterized in that** it incorporates a database (21) listing the addresses called AESA of the UNI or NNI ports of each of the said access nodes.

13. Program according to Claim 11 or 12, **characterized in that** it comprises a database (21) listing the pairs of VPI/VCI identifiers for the ends of each of the connections that can be established between two access nodes of the said telecommunications network.

14. Program according to one of Claims 11 to 12, **characterized in that** it is designed to be implemented on a centralized management system of the said network.

15. Program according to one of Claims 11 to 12, **characterized in that** it is designed to be implemented on a dedicated machine that can be connected to the centralized management system of the said network.

## Patentansprüche

1. Verfahren zur Prüfung des Zustands der Steuerebene eines Telekommunikationsnetzwerks, das Zugriffsknoten und interne Knoten aufweist, wobei das Netzwerk ein Verbindungszustand-Routingprotokoll anwendet, das es ermöglicht, die Zustandsinformationen von aufgebauten Verbindungen und die Informationen betreffend die von den Verbindungen benutzten Knoten zu kennen, wobei das Netzwerk außerdem ein Signalisationsprotokoll anwendet, das es ermöglicht, Verbindungen zwischen zwei Zugriffsknoten des Netzwerks ausgehend von einem der Knoten aufzubauen, **dadurch gekennzeichnet, dass** es die folgenden Schritte aufweist:
- ausgehend von einem Netzwerk-Zugriffsknoten, Anfordern des Aufbaus einer Verbindung zwischen diesem Zugriffsknoten und einem anderen Zugriffsknoten,
- Aufnehmen des Zustands des erfolgreichen Aufbaus oder des nicht erfolgten Aufbaus der Verbindung, und wenn diese aufgebaut werden konnte, ebenfalls der von dieser Verbindung zwischen den internen Knoten benutzten Route,
- Freigabe der Verbindung, wenn sie aufgebaut werden konnte,
- erneutes Durchführen für alle anderen Zugriffsknoten, deren Verbindungen mit dem ursprünglichen Zugriffsknoten zu prüfen sind,
- Analyse der Zustandsinformationen des Aufbaus der zu prüfenden Verbindungen, die so aufgenommen wurden, und der von den Verbindungen, die aufgebaut werden konnten, zwischen den internen Knoten benutzten Routen, zum Zweck der Prüfung des Zustands der Steuerebene des Netzwerks.

2. Prüfverfahren nach Anspruch 1, **dadurch gekennzeichnet, dass** das Telekommunikationsnetzwerk ein ATM-Netzwerk ist, dass das Routingprotokoll und das Signalisationsprotokoll in einem Protokoll vom Typ PNNI enthalten sind, und dass die zwischen Zugriffsknoten des Netzwerks aufgebauten Verbindungen vom Typ soft-permanente virtuelle Verbindung "SPVC" sind.

3. Prüfverfahren nach Anspruch 2, **dadurch gekennzeichnet, dass** zum Aufbau der Verbindungen zwischen Zugriffsknoten des Netzwerks die AESA-Adresse eines UNI-Ports jedes der Zugriffsknoten verwendet wird.

4. Prüfverfahren nach Anspruch 2 oder 3, **dadurch gekennzeichnet, dass** zum Aufbau einer Verbindung zwischen zwei Zugriffsknoten des Netzwerks ein Paar von Identifikatoren VPI/VCI für die Enden der Verbindung verwendet wird.

5. Prüfverfahren nach Anspruch 1, **dadurch gekennzeichnet, dass** das Telekommunikationsnetzwerk ein IP-Netzwerk ist, das ein MPLS-Protokoll verwendet, und dass die zwischen Zugriffsknoten des Netzwerks aufgebauten Verbindungen LSP-Strecken sind.

6. System zur Prüfung des Zustands der Steuerebene eines Telekommunikationsnetzwerks, das Zugriffsknoten und interne Knoten aufweist, wobei das Netzwerk ein Verbindungszustand-Routingprotokoll anwendet, das es ermöglicht, die Zustandsinformationen von aufgebauten Verbindungen und die Informationen betreffend die von den Verbindungen genutzten Knoten zu kennen, wobei das Netzwerk außerdem ein Signalisationsprotokoll anwendet, das es ermöglicht, Verbindungen zwischen zwei Zugriffsknoten des Netzwerks ausgehend von einem der Knoten aufzubauen, **dadurch gekennzeichnet, dass** es aufweist:
- Mittel (22), um ausgehend von einem Netzwerk-Zugriffsknoten den Aufbau einer Verbindung zwischen diesem Zugriffsknoten und einem anderen Zugriffsknoten des Netzwerks zu steuern, dessen Verbindungen mit dem ursprünglichen Zugriffsknoten zu prüfen sind,
- Mittel (22), um den Zustand des erfolgreichen Aufbaus oder des nicht erfolgten Aufbaus der Verbindung, deren Aufbau gefordert wurde, aufzunehmen, und um die von der Verbindung, wenn diese aufgebaut werden konnte, benutzte Route zwischen den internen Knoten aufzunehmen,
- Mittel, um die Verbindung freizugeben, wenn sie aufgebaut werden konnte,
- Mittel zur erneuten Durchführung für alle anderen Zugriffsknoten, deren Verbindungen mit dem ursprünglichen Zugriffsknoten zu prüfen sind,
- Mittel (23) zur Analyse der Aufbau-Zustandsinformationen der zu prüfenden Verbindungen und der von den Verbindungen, die aufgebaut werden konnten, zwischen den internen Knoten benutzten Routen, zum Zweck der Prüfung des Zustands der Steuerebene des Netzwerks.

7. Prüfsystem nach Anspruch 5, **dadurch gekennzeichnet, dass** es eine Datenbasis (21) aufweist, die die AESA-Adressen der Ports UNI oder NNI jedes der Zugriffsknoten erfasst.

8. Prüfsystem nach Anspruch 5 oder 6, **dadurch gekennzeichnet, dass** es eine Datenbasis (21) aufweist, die die Paare von Identifikatoren VPI/VCI für die Enden jeder der Verbindungen erfasst, die zwischen zwei Zugriffsknoten des Telekommunikationsnetzwerks aufgebaut werden können.

9. Prüfsystem nach einem der Ansprüche 6 bis 8, **dadurch gekennzeichnet, dass** es vorgesehen ist, um mit dem zentralisierten Verwaltungssystem des Netzwerks verbunden zu werden.

10. Prüfsystem nach einem der Ansprüche 6 bis 8, **dadurch gekennzeichnet, dass** es integrierender Bestandteil des zentralisierten Verwaltungssystems des Netzwerks ist.

11. Programm, das dazu bestimmt ist, in ein System zur Prüfung des Zustands der Steuerebene eines Telekommunikationsnetzwerks implementiert zu werden, das Zugriffsknoten und interne Knoten aufweist, wobei das Netzwerk ein Verbindungszustand-Routingprotokoll anwendet, das es ermöglicht, die Zustandsinformationen von aufgebauten Verbindungen und die Informationen betreffend die von den Verbindungen benutzten Knoten zu kennen, wobei das Netzwerk außerdem ein Signalisationsprotokoll anwendet, das es ermöglicht, Verbindungen zwischen zwei Zugriffsknoten des Netzwerks ausgehend von einem der Knoten aufzubauen, **dadurch gekennzeichnet, dass** es aufweist:
- Mittel, um ausgehend von einem Netzwerk-Zugriffsknoten den Aufbau einer Verbindung zwischen diesem Zugriffsknoten und einem anderen Zugriffsknoten anzufordern,
- Mittel, um den Zustand des erfolgreichen Aufbaus oder des nicht erfolgten Aufbaus der Verbindung, und, wenn diese aufgebaut werden konnte, ebenfalls die von der Verbindung zwischen den internen Knoten benutzte Route aufzunehmen,
- Mittel, um die Verbindung freizugeben, wenn sie aufgebaut werden konnte,
- Mittel zur erneuten Durchführung für alle anderen Zugriffsknoten, deren Verbindungen mit dem ursprünglichen Zugriffsknoten zu prüfen sind;
- Mittel zur Analyse der Aufbau-Zustandsinformationen des Aufbaus der zu prüfenden Verbindungen und der von den Verbindungen, wenn diese aufgebaut werden konnten, zwischen den internen Knoten benutzten Routen.

12. Programm nach Anspruch 11, **dadurch gekennzeichnet, dass** es eine Datenbasis (21) aufweist, die die AESA-Adressen der Ports UNI oder NNI jedes der Zugriffsknoten erfasst.

13. Programm nach einem der Ansprüche 11 oder 12, **dadurch gekennzeichnet, dass** es eine Datenbasis (21) aufweist, die die Paare von Identifikatoren VPI/VCI für die Enden jeder der Verbindungen erfasst, die zwischen zwei Zugriffsknoten des Telekommunikationsnetzwerks aufgebaut werden können.

14. Programm nach einem der Ansprüche 11 bis 12, **dadurch gekennzeichnet, dass** es vorgesehen ist, um in ein zentralisiertes Verwaltungssystem des Netzwerks implementiert zu werden.

15. Programm nach einem der Ansprüche 11 bis 12, **dadurch gekennzeichnet, dass** es vorgesehen ist, um in eine zugeordnete Maschine implementiert zu werden, die mit dem zentralisierten Verwaltungssystem des Netzwerks verbunden werden kann.
